# EUROPEAN PATENT APPLICATION

(11) **EP 1 059 733 A1**
(43) Date of publication of application: **13.12.2000**
(21) Application number: 00304853.5
(22) Date of filing: 08.06.2000
(51) Int. Cl.: H04B 1/38, H01Q 1/24

(54) **Mobile telephone handset**

(30) Priority: 10.06.1999 GB 9913374
(71) Applicant: Pace Micro Technology Ltd, Saltaire, Shipley BD18 3LF (GB)
(72) Inventor: Rawlinson, Peter, Illingworth, Halifox, HX2 9LT (GB)
(74) Representative: Wood, Graham

(57) **Abstract**

The invention relates to the a telephone handset of the type which includes an antenna to allow the transmission, and typically reception of data for outgoing and incoming telephone calls. These handsets are typically used as mobile phones or phones for use in DECT telephone systems. The invention provides for the location of the antenna at a remote position from the vicinity of the earpiece of the handset so as to reduce or remove the risk of damage to the user due to energy absorption from the antenna. In one embodiment the antenna is provided as an integral part of the handset and located from the bottom or side of the handset or can be provided to depend from the handset via a wire connection.

## Description

The invention which is the subject of this application is a telephone handset and particularly, although not necessarily, a telephone handset of the type known as a mobile telephone which has no wire or cable connection to a base and rather receives incoming and allows outgoing telephone calls via an antenna which transmits and receives data relating to said calls.

There are two basic forms of mobile telephone handsets, one being a type which has an antenna and is for use within a limited range of a base such as a DECT phone system. The base receives and transmits telephone call data from a conventional wire connection and then relays the data via the antenna to the handset. This type of system is known as a "cordless telephone". The second type of mobile handset, and that for which it is believed the current invention is of most use, is the type of handset which has an antenna and which can be used at locations over a much wider range, perhaps country or world-wide as long as it is within a reception area. Relay masts are increasingly constructed throughout this country and the world so the reception areas for this type of phone are expanding rapidly. This type of system is known as a "cellular telephone network''.

This second type of mobile handset is increasingly manufactured in smaller and smaller sizes but the basic concept is always the same in that when in use there is provided at the top end of the handset an antenna and an ear piece which is held to the ear. Towards the bottom end of the handset or depending from the same there is provided a mouthpiece which is held in the vicinity of the mouth. Thus, when the handset is in use the antenna, which is close to the earpiece is held very close to the user's head.

Recently and increasingly there has been concern about a potential risk to the health of users of mobile phones and in particular to the head and brain of the user due to the effects of electromagnetic microwave radiation which is used as the transmission medium for the carrying of data to and from the handset. This data is transmitted by the antenna and it is believed that a significant degree of this radiation is absorbed directly by the soft tissue of the human brain due to the close proximity of the antenna to the brain when the handset is in use. The effect of this radiation is largely theoretical but it is believed that it may give rise to tumours, memory loss, headaches and the like. One known solution to this problem is to fit the handset with a shield of a material which restricts the transmission of radiation and the said shield encloses the handset so as to reduce the absorption of radiation into the brain. However the use of the shield serves to increase the size of the handset, adds extra expense and can affect the visual appearance of the same.

The aim of the present invention is to provide a telephone handset which is of the mobile or cordless variety and can be carried by the user as they move at will and which is adapted to receive data for incoming and outgoing telephone calls from and to a remote source and which reduces the absorption of the data transmission medium by a person when the handset is in use.

In a first aspect of the invention there is provided a telephone handset for use in receiving and transmitting data for outgoing and incoming telephone calls from a remote source without a wire connection, said handset including an antenna to at least transmit said data carried by a transmission medium and wherein the handset has a top end in which an earpiece is provided or depends therefrom and a bottom end in which a mouthpiece is provided or depends therefrom and wherein the antenna is positioned on or depends from the handset at a location which is removed from the top end of the handset.

The provision of the antenna at a position other than the top end of the handset means that the antenna is not located in close proximity to the head and in particular the brain of the user of the handset. This in turn means that the transmission energy which is transmitted by the antenna is not as close to the brain as in conventional handsets and, as such, is not likely to be absorbed by the brain to as great a degree as with conventional handsets where the antenna is located adjacent the top end of the handset and the earpiece.

In one embodiment the antenna is provided as part of the handset and is located to protrude downwardly from the bottom end of the handset or alternatively to protrude from the side edge of the handset, typically the side edge opposing that which is held closest to the head when in use.

In an alternative embodiment the antenna is provided to depend from the handset and is connected to the same by a wire connection so that, for example, the antenna can hang below the handset or can be attached to clothing or other articles in a similar manner to the mobile phones which have mouthpieces connected to the telephone.

In one embodiment the remote source is a transmitter mast and the telephone handset is a mobile phone. In an alternative embodiment the remote location is a base station of a DECT phone system and the handset can be used in and around said premises

In a further aspect of the invention there is provided a telephone system for mobile use in transmitting and receiving data for outgoing and incoming telephone calls from a remote source, said system including a handset and an antenna to at least transmit said data carried by a transmission medium and wherein, in use the antenna is connected to the handset via a wire connection and depends from the handset or is carried by the user of the handset.

The antenna can depend from the handset by hanging down from the same when in use or can be provided with means to allow the same to be located on clothing of the user. Typically, in whichever embodiment the antenna is positioned so as to be out of the immediate vicinity of the head of the user.

Typically the antenna is provided to allow both the transmission and reception of data to and from the remote location.

Specific embodiments of the invention will now be described with reference to the accompanying drawings wherein;
Figure 1 illustrates a first embodiment of a handset in accordance with the invention; and
Figure 2 illustrates a second embodiment of a handset in accordance with the invention.

Referring now to both Figures there is provided a telephone handset 2 which includes an earpiece 4 in a conventional location adjacent the top end 6 of the handset and a mouthpiece 8 adjacent the bottom end 9 of the handset so that when the handset is placed to the head for use the ear piece can be placed onto the ear and the mouthpiece can be held in reasonably close proximity to the users mouth. Intermediate the mouthpiece and earpiece are provided a number of buttons 11 to allow the selection of functions and dialling of numbers in a conventional manner and a display screen 13. There are numerous shapes, styles and designs of telephone handsets of this type but they all tend to have the features described so far and are used in a broadly similar manner.

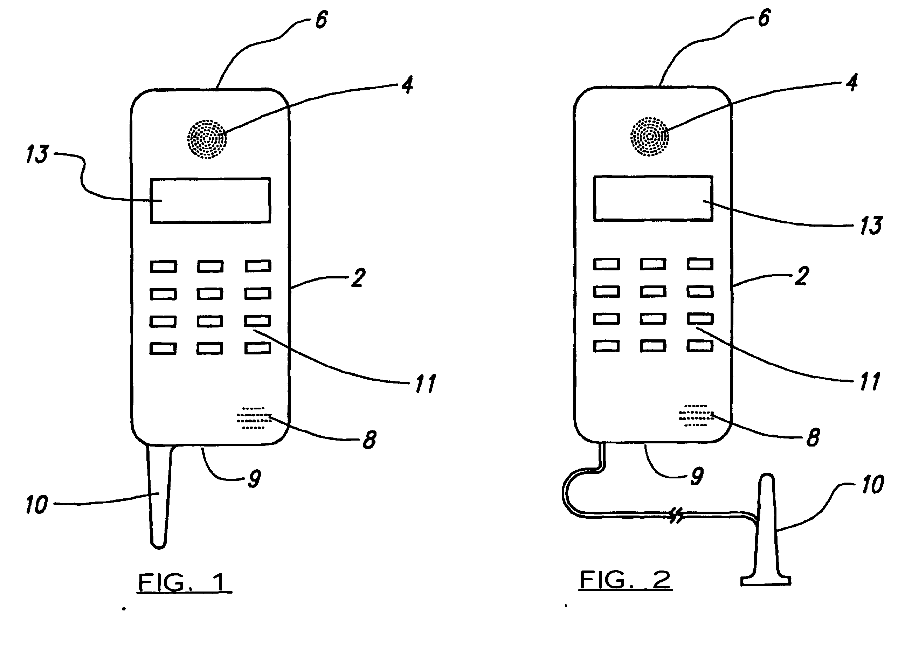

Referring now to Figure 1 it is shown that an antenna 10 is provided to transmit and simultaneously receive the data carrying medium, which are electromagnetic waves. In conventional handsets the antenna is located adjacent the top end 6 of the handset and is therefore placed close to the earpiece 4 and hence close to the ear and the brain of the user when the handset is in use. However in accordance with the invention, in this embodiment the antenna 10 is located at the bottom end 9 of the handset as shown. This means that when the handset is used the antenna is not adjacent the ear or brain of the user and is removed from the brain by say a distance of at least 100mm.

Figure 2 illustrates a further embodiment where the antenna 10 is provided in connection with the handset via a wire connection 12 and can either hang from the handset or be connected to clothing or another article of the wearer thus once again ensuring that the antenna is a spaced distance removed from the brain of the user when in use.

The use of this invention will reduce the absorption by the brain and body tissue of microwave radiation by a considerable extent as the antenna which is the source of the radiation to the brain is no longer in close proximity to the head in use. This is due to the propagation characteristics of electromagnetic energy through air i.e. the power density will reduce by the square of the linear distance ratio. Thus as an illustration only, if the antenna/brain distance is increased from 50mm to 150mm (3:1 ratio) the actual power density received by the brain will reduce by (3 x 3) 9 times.

It is clear that a relatively small increase in the distance between the brain and the antenna of the telephone handset when in use can result in a significant reduction in the brain energy absorption level and hence reduce any risk of damage to the health of the user without unduly affecting the operation of the telephone handset as the antenna can still operate in a conventional manner to transmit and receive data.

## Claims

1. A telephone handset for use in receiving and transmitting data for outgoing and incoming telephone calls from a remote source without a wire connection between the handset and remote source, said handset including an antenna to at least transmit said data carried by a transmission medium and characterised in that the handset has a top end in which an earpiece is provided or depends therefrom and a bottom end in which a mouthpiece is provided or depends therefrom and wherein the antenna is positioned on or depends from the handset at a location which is removed from the top end of the handset.

2. A telephone handset according to claim 1 characterised in that the antenna is located such that when the handset is in use the antenna is not located as close to the head as other parts of the handset.

3. A telephone handset according to claim 1 characterised in that the antenna is an integral part of the handset and protrudes downwardly from the bottom end of the handset.

4. A telephone handset according to claim 1 characterised in that the antenna is an integral part of the handset and protrudes from a side edge of the handset.

5. A telephone handset according to claim 1 characterised in that the antenna depends from the handset and is connected to the same by a wire connection

6. A telephone handset according to claim 5 characterised in that the antenna , when the handset in use hangs down from the handset.

7. A telephone handset according to claim 6 characterised in that the antenna is provided with attachment means to allow the same to be attached to an article when in use.

8. A telephone handset according to claim 1 characterised in that the antenna is capable of receiving and transmitting data.

9. A telephone handset in accordance with claim 1 characterised in that the remote source is a transmitter mast and the telephone handset is a mobile phone.

10. A telephone handset according to claim 1 characterised in that the remote location is a base station of a DECT phone system and the handset can be used in and around said premises.

11. A telephone system for mobile use in transmitting and receiving data for outgoing and incoming telephone calls from a remote source, said system including a handset and an antenna to at least transmit said data carried by a transmission medium and characterised in that in use the antenna is connected to the handset via a wire connection and depends from the handset.

12. A telephone system according to claim 9 characterised in that the antenna can be positioned at a location removed from the head of the user.
